# EUROPÄISCHE PATENTANMELDUNG

(11) **EP 2 515 261 A1**
(43) Veröffentlichungstag der Anmeldung: **24.10.2012**
(21) Anmeldenummer: 11163408.5
(22) Anmeldetag: 21.04.2011
(51) Int. Cl.: G06Q 10/00, G06Q 90/00

(54) **Dokumentationssystem für eine Anlage und Verfahren zu dessen Betrieb**

(71) Anmelder: SIEMENS AKTIENGESELLSCHAFT, 80333 München (DE)
(72) Erfinder: Müller, Günther-Josef, 90522, Oberasbach (DE)

(57) **Zusammenfassung**

Ein Dokumentationssystem (6) für eine, eine Vielzahl von Anlagenteilen (4a,b) umfassende Anlage, enthält an den Anlagenteilen (4a,b) anbringbare, ein jeweiliges Anlagenteil (4a,b) eindeutig kennzeichnende Kennmarken (8a,b), einen Dokumentationsdaten (12) der Anlage (2) enthaltenden Datenspeicher (10), ein mobiles Anzeigegerät (16) für die Dokumentationsdaten (12), eine, vorzugsweise am Anzeigegerät (16) angeordnete, Erfassungseinheit (22) zur Erfassung einer der Kennmarken (8a,b), und eine das Anzeigegerät (16) anhand der Erfassungseinheit (22) derart betreibende Steuerung (24), dass bei Erfassung der Kennmarke (8a,b) jeweilige, dem durch die Kennmarke (8a,b) gekennzeichneten Anlagenteil (4a,b) zugeordnete Dokumentationsdaten (12) vom Datenspeicher (10) zum Anzeigegerät (16) übertragen und dort dargestellt werden.

Bei einem Verfahren zum Betreiben des Dokumentationssystems (6) wird an einem jeweiligen Anlagenteil (4a,b) eine der Kennmarken (8a,b) angebracht, werden die Dokumentationsdaten (12) im Datenspeicher (10) abgelegt, erfasst die Erfassungseinheit (22) eine der Kennmarken (8a,b), und betreibt die Steuerung (24) das Anzeigegerät (16) derart, dass bei Erfassung der Kennmarke (8a,b) jeweilige, dem gekennzeichneten Anlagenteil (4a,b) zugeordnete Dokumentationsdaten (12) vom Datenspeicher (10) zum Anzeigegerät (16) übertragen und dort dargestellt werden.

## Beschreibung

Die Erfindung betrifft ein Dokumentationssystem für eine Anlage und ein Verfahren zum Betreiben dieses Dokumentationssystems.

Als in Rede stehende Anlagen kommen beispielsweise Automatisierungsanlagen der Industrie, Kraftwerksanlagen, elektrische Installationsanlagen für Gebäude in Frage. Anlagen können aber auch Kleinsysteme wie Industrieantriebe bzw. -motoren oder Umrichter sein. Dies können Neuanlagen, Modernisierungsanlagen, Altanlagen oder Teilanlagen einer übergeordneten größeren Anlage sein.

Insbesondere sind derartige Anlagen in verschiedene Anlagenteile, z.B. Schaltschränke, komplexe Maschinen oder Geräte, wie Motoren oder Umrichter unterteilt. Jeder dieser Anlagenteile kann unter Umständen eine Vielzahl der oben genannten Komponenten enthalten.

Derartige Anlagen bzw. Anlagenteile erfordern eine - unter Umständen äußerst umfangreiche - Dokumentation in Form von Dokumentationsdaten. Die Dokumentationsdaten geben hierbei Auskunft über in der Anlage vorhandene Teilsysteme, Einzelteile oder Elemente, deren räumliche Anordnung, Verbindung, Verschaltung, technische Daten, Zusammenwirken usw. Die Dokumentationsdaten sind z.B. Schaltpläne, Stromlaufpläne, Konstruktionszeichnungen oder ähnliches.

Bekannt ist es, Dokumentationsdaten in Form von umfangreichen Papierunterlagen anzufertigen und z.B. mit einer Neuanlage auszuliefern. Eine Vielzahl von Ordner mit Papierunterlagen wird dann üblicherweise in einem zentralen Büro oder z.B. auf verschiedene Schalthäuser aufgeteilt, aufbewahrt.

Die Dokumentationsdaten werden jedoch im Verlauf der Inbetriebnahme einer Neuanlage oder im Rahmen von Servicetätigkeiten, bei Störungen der Anlage oder Erweiterung der Anlage immer wieder benötigt. Bekannt ist es, dass ein Mitarbeiter einen entsprechenden Ordner mit Papierunterlagen zunächst an das betreffende Anlagenteil mitnimmt, um dort anhand der Dokumentationsdaten das Anlagenteil zu überprüfen oder einen Fehler an diesem zu beheben. Die Dokumentationsdaten in Form des Ordners verbleiben dann aber oft am Ort des Anlagenteils und werden nicht wieder an die zentrale Stelle zurückgebracht. Oft werden auch Seiten aus dem Papierunterlagen entfernt. Änderungen in den Dokumentationsdaten werden nicht immer eingetragen. Personal, welches die Dokumentationsdaten zu einem späteren Zeitpunkt benötigt, muss zum Beispiel zunächst den entsprechenden Ordner suchen und dann zudem anhand des zu bearbeitenden Anlagenteils identifizieren, welcher Teil der Dokumentationsdaten für dieses Anlagenteil relevant ist. Hierzu muss das Ablagesystem der Dokumentationsdaten dem Benutzer bekannt sein. Erst dann ist es möglich, den in den Dokumentationsdaten dokumentieren Anlagenzustand mit dem tatsächlichen Zustand der Anlage zu vergleichen.

Insbesondere Papierunterlagen älterer Anlagen befinden sich also oft nicht mehr am dafür ursprünglich vorgesehenen Ort, sondern sind über die Anlage verteilt, lückenhaft, nicht entsprechend ergänzt bzw. aktualisiert, insbesondere also nicht komplett oder nicht auf den neuesten Stand. Bei der Behebung von Störungen an bestehenden Anlagen, bei Serviceleistungen an den Anlagen, bei Modernisierungen bereits bestehender Anlagen und auch bei der Inbetriebnahme von Neuanlagen kommt es daher immer wieder zu zeitlichen Verzögerungen oder zu Missverständnissen, weil die Dokumentationsdaten schwer auffindbar, oft nicht komplett oder nicht auf dem neuesten Stand sind. All dies kostet sehr viel wertvolle Zeit.

Bekannt ist es auch, die Dokumentationsdaten in Form von elektronischen Dokumenten, wie z.B. PDF-Dateien für die Anlage vorzusehen, und z.B. mit dieser auszuliefern. Im PDF-Format ist in der Regel eine interne Verlinkung der Inhalte bekannt. Die PDF-Datei enthält dann bestimmte, anklickbare Schlüsselworte oder Zeichnungselemente. Der Klick führt dann zu einem entsprechenden anderen Abschnitt derselben PDF-Datei. Für Dokumentationsdaten in elektronischer Form ist es bekannt, diese auf einen zentralen Rechner der Anlage oder des Unternehmens, in welchem die Anlage installiert ist, zu laden.

Insbesondere werden Änderungen, Anmerkungen Ergänzungen der Anlage oft nicht in die elektronischen Dokumentationsdaten übernommen. Oft werden lediglich ergänzende Hinweise zu den elektronischen Dokumentationsdaten auf Papier fixiert und an einem anderen Ort abgelegt.

Aufgabe der vorliegenden Erfindung ist es, ein verbessertes Dokumentationssystem für eine Anlage und ein verbessertes Verfahren zum Betreiben des Dokumentationssystems anzugeben.

Hinsichtlich des Dokumentationssystems wird die Aufgabe gelöst durch ein solches gemäß Patentanspruch 1. Die Anlage umfasst dabei eine Vielzahl von Anlagenteile. Das Dokumentationssystem umfasst verschiedene Kennmarken, wobei jeweils eine Kennmarke an einem der Anlagenteile anbringbar ist und somit dieses eindeutig kennzeichnet. Die Zuordnung der Kennmarke zum jeweiligen Anlagenteil ist hierbei eindeutig und intuitiv erkennbar. Z.B. wird die Kennmarke unmittelbar am oder in der Nähe des Anlagenteils, eindeutig auf dieses verweisend, angebracht. Ein Anlagenteil ist hierbei beispielsweise ein Schaltschrank oder Schaltpult. Die eindeutige Kennzeichnung erfolgt derart, dass die Kennmarke beispielsweise auf dem Anlagenteil - jederzeit gut sichtbar - direkt in Form eines Aufklebers angebracht wird. Die Kennmarke ist hierbei beispielsweise ein Barcode. Auch können sicherheitshalber mehrere gleiche Kennmarken an verschiedenen Stellen des Anlagenteils angebracht werden, z.B. außen und innen an einem Schaltschrank.

Das Dokumentationssystem weist außerdem einen Datenspeicher auf, in welchem die Dokumentationsdaten der Anlage in elektronischer Form gespeichert sind.

Das Dokumentationssystem umfasst außerdem ein mobiles Anzeigegerät, welches zur Anzeige von Dokumentationsdaten dient. Das Dokumentationssystem, insbesondere das Anzeigegerät enthält eine Erfassungseinheit, welche die Erfassung bzw. Identifizierung einer Kennmarke ermöglicht. Das Dokumentationssystem enthält außerdem eine Steuerung, welche das Anzeigegerät anhand der Erfassungseinheit derart betreibt: Bei Erfassung der Kennmarke durch die Erfassungseinheit werden jeweilige Dokumentationsdaten, die dem durch die Kennmarke gekennzeichneten Anlagenteil zugeordnet sind, vom Datenspeicher zum Anzeigegerät übertragen und auf dem Anzeigegerät bzw. dessen Anzeigeeinrichtung, dargestellt.

Durch die elektronische Speicherung der Dokumentationsdaten in einem zentralen Datenspeicher ist es möglich, diese durch Veränderung an dieser einen zentralen Stelle stets aktuell zu halten. Die Übertragung der Dokumentationsdaten des betreffenden Anlageteils zum Anzeigegerät erfolgt erst dann, wenn diese vor Ort an der Anlage vom mobilen Gerät tatsächlich angefordert werden, nämlich wenn die Kennmarke erfasst wird. So ist sichergestellt, dass jeweils nur aktuelle Daten aus dem Datenspeicher an das Anzeigegerät übertragen werden und somit auch dort stets aktuelle Anlagendaten angezeigt werden. Ein entsprechendes Dokumentationssystem kann für Neuanlagen, Modernisierungsanlagen aber auch für Einzelteile bestehender Anlagen verwendet werden. Das Dokumentationssystem ermöglicht ein dezentrales Zugreifen auf die gewünschten Dokumentationsdaten. Ein langes Suchen der "richtigen" Daten entfällt, da dies automatisch über die Erfassung des Anlagenteils und die Zuordnung bzw. Übertragung und Anzeige der diesem zugehörigen Daten erfolgt. Dem jeweiligen Anwender des mobilen Anzeigegerätes wird ermöglicht, die Dokumentationsdaten jederzeit vor Ort einzusehen.

Das Dokumentationssystem, vorzugsweise die Steuerung verfügt hierbei über das Wissen jeweiliger Zuordnungen, nämlich welcher Teil der Dokumentationsdaten hierbei dem entsprechend der Kennmarke gekennzeichneten Anlagenteil zugeordnet ist. Mit anderen Worten sind die - sich z.B. durch verschiedene Zahlen- oder Strichcodes unterscheidenden - Kennmarken z.B. über eine Software mit den entsprechenden Dokumentationsdaten, wie z.B. Plänen für ein bestimmtes Anlagenteil in Form eines Schaltschranks, vernetzt. Das Anzeigegerät ist beispielsweise ein handelsübliches elektronisches Buch (e-book), ein Laptop, ein Smartphone oder ein Handheld-PC.

In einer bevorzugten Ausführungsform der Erfindung enthält das Anzeigegerät eine auf die Dokumentationsdaten einwirkende Eingabeeinrichtung. Die Eingabeeinrichtung ermöglicht z.B. eine Menüführung für bestimmte Darstellungsarten der Dokumentationsdaten usw. Der Benutzer des Anzeigegerätes kann beispielsweise die genauen (Teil-)Daten auswählen, die er betrachten möchte. Er kann die Darstellung beeinflussen. Die Benutzung von internen Verknüpfungen (Hyperlinks) in den Dokumentationsdaten wird möglich, um den Benutzer innerhalb der Dokumentationsdaten zu anderen Abschnitten führen.

In einer bevorzugten Variante dieser Ausführungsform enthält die Eingabeeinrichtung eine berührungsempfindliche Anzeigeeinrichtung (Touchscreen). Die Anzeigeeinrichtung (Bildschirm) fungiert dann gleichermaßen als Eingabeeinrichtung.

In einer weiteren Variante der Ausführungsform ist die Eingabeeinrichtung für eine Veränderung der Dokumentationsdaten ausgebildet. Das Anzeigegerät enthält dann außerdem eine Sendeeinrichtung zur Übertragung veränderter Dokumentationsdaten zurück zum Datenspeicher. Die Eingabeeinrichtung ermöglicht damit auch eine Bearbeitung der Dokumentationsdaten, dass heißt auch deren Pflege, Veränderung, Kommentierung, Ergänzung oder Löschung. Hierzu ist insbesondere folgendes Vorgehen denkbar: Beabsichtigt der Benutzer des Anzeigegerätes, Dokumentationsdaten zu verändern, checkt dieser die Daten zunächst am Datenspeicher aus, wodurch diese zunächst für andere Benutzer auf Nur-Lese-Zugriff verändert werden. Der Benutzer verändert dann die Daten lokal am Anzeigegerät und checkt diese erst nach der Veränderung wieder am Datenspeicher ein. Erst dann werden die veränderten Daten wieder für alle Benutzer - auch zur Veränderung - freigegeben. Hierbei ist auch eine entsprechende systeminterne Protokollierung, die Vergabe von Datumsstempeln usw. möglich.

In einer weiteren Ausführungsform der Erfindung weist das Dokumentationssystem eine, einen Benutzer erkennende Identifikationseinheit auf. Somit wird zunächst ein Benutzer, welcher Dokumentationsdaten einsehen und/oder bearbeiten will, zunächst am Dokumentationssystem identifiziert, z.B. in Verbindung mit einem Autorisierungscode (Passwort). Die Identifikationseinheit kann sich insbesondere am Anzeigegerät befinden, damit sich der Benutzer lokal dort identifizieren kann. Beispielsweise verwaltet dann die Steuerung jeweilige Berechtigungen wie z.B. anzuzeigende Inhalte oder Schreib-/Leserechte abhängig von verschiedenen Benutzern. Die Eingabeeinrichtung kann beispielsweise als Teil der Identifikationseinheit, also zur Authentifizierung des Bedieners dienen. Bei Änderungen der Dokumentationsdaten ist so die Speicherung des Autors der Änderungen möglich.

In einer weiteren bevorzugten Ausführungsform der Erfindung weist das Dokumentationssystem eine Schnittstelle zu einem Hersteller zumindest eines Teils der Anlage auf. Die Schnittstelle dient zum Austausch von Dokumentationsdaten mit dem Hersteller. Der Hersteller ist also ein Hersteller der Anlage, eines Anlagenteils, oder einer sonstigen Komponente der Anlage. Hierdurch können über die bereits beim Endkunden bzw. bei der Anlage bestehenden Dokumentationsdaten hinaus z.B. aktualisierte Versionen solcher Daten, Informationen über Verfügbarkeit und Aktualität bzw. technische Daten von Ersatzteilen oder ähnliches zeitnah direkt beim Hersteller angefragt werden und über die Schnittstelle in die Dokumentationsdaten einfließen. Auch am Anzeigegerät stehen somit stets aktualisierte und über die ursprünglichen Dokumentationsdaten hinausgehende Anlagendaten zur Verfügung. Seitens des Herstellers sind hier auch verschiedene Lizenzierungs- oder Kostenmodelle denkbar, je nach Zugriff auf die entsprechenden aktualisierten Herstellerinformationen.

In einer weiteren bevorzugten Ausführungsform der Erfindung enthält die Erfassungseinheit einen die Kennmarke optisch erfassenden Scanner. Der Scanner ist hierbei beispielsweise ein Laserscanner oder eine Kamera, die Kennmarke trägt dann einen optisch erfassbaren Code, z.B. einen 1D- oder 2D-Barcode. Optisch erfassbare Kennmarken sind besonders gut auch mit dem menschlichen Auge zu erfassen und können besonders einfach, z.B. in Form eines bedruckten Aufklebers erstellt und auch angebracht werden.

Kennmarken können aber auch z.B. elektronische Vorrichtungen wie z.B. RFID-Chips oder ähnliches enthalten. Die Erfassung erfolgt dann z.B. durch Funksignale.

Hinsichtlich des Verfahrens wird die Aufgabe gelöst durch ein Verfahren gemäß Patentanspruch 8 zum Betreiben des oben beschriebenen Dokumentationssystems. Gemäß dem Verfahren wird an einem jeweiligen Anlagenteil eine der Kennmarken angebracht und die Dokumentationsdaten im Datenspeicher abgelegt. Die Erfassungseinheit erfasst dann eine der Kennmarken an dem entsprechenden Anlagenteil und die Steuerung betreibt das Anzeigegerät derart: Bei Erfassung der Kennmarke werden die dem jeweiligen Anlagenteil zugehörigen Dokumentationsdaten vom Datenspeicher zum Anzeigegerät übertragen und auf diesem dargestellt.

Das Verfahren sowie dessen Vorteile wurden bereits im Zusammenhang mit dem Dokumentationssystem oben erläutert.

Eine vorteilhafte Weiterbildungen des Verfahrens ist, dass durch die Eingabeeinrichtung auf die Dokumentationsdaten eingewirkt wird, insbesondere diese dadurch verändert werden und die Sendeeinrichtung die veränderten Dokumentationsdaten zum Datenspeicher überträgt. Eine weitere Weiterbildung ist, dass die Identifikationseinheit den Benutzer erkennt oder über die Schnittstelle Dokumentationsdaten mit dem Hersteller zumindest eines Teils der Anlage ausgetauscht werden. Eine weitere Weiterbildung ist, dass der Scanner die Kennmarke optisch erfasst. Auch diese Weiterbildungen wurden oben im Zusammenhang mit den entsprechenden Vorrichtungen erläutert.

Für eine weitere Beschreibung der Erfindung wird auf die Ausführungsbeispiele der Zeichnung verwiesen. Es zeigt, in einer schematischen Prinzipskizze:

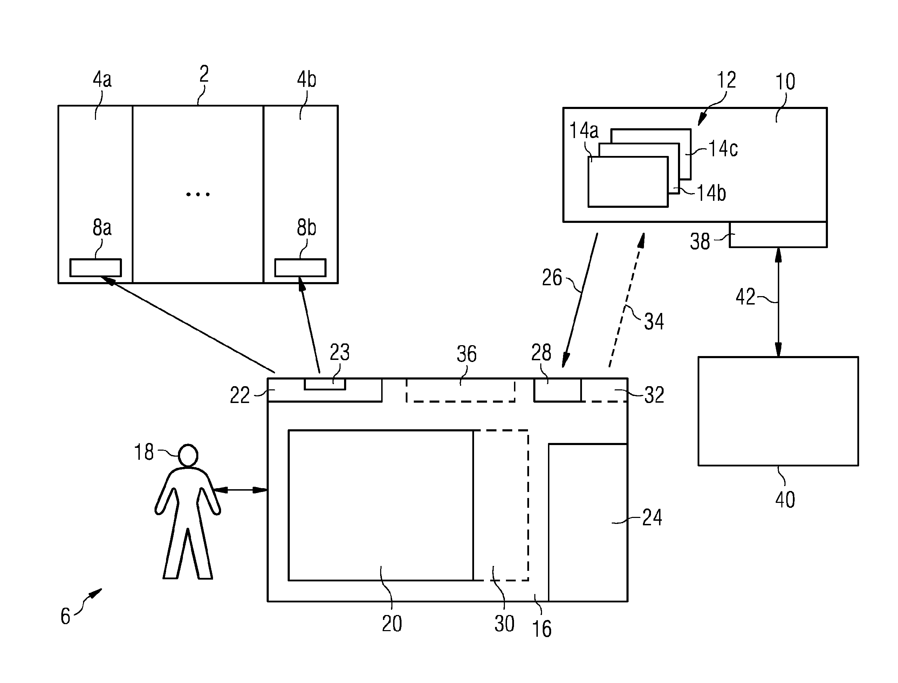

- Fig. 1: eine Anlage mit einem Dokumentationssystem gemäß der Erfindung.

Fig. 1 zeigt eine Anlage 2, im Beispiel eine Automatisierungsanlage, welche eine Reihe von Anlagenteilen umfasst, von denen in Fig. 1 die Anlagenteile 4a,b - im Beispiel Schaltschränke - dargestellt sind. Der Anlage 2 ist ein Dokumentationssystem 6 zugeordnet. Dieses umfasst eine Reihe von Kennmarken, von denen in Fig. 1 die Kennmarken 8a,b dargestellt sind. Jede der Kennmarken 8a,b ist eindeutig einem der Anlagenteile 4a,b zugeordnet und daher in Form eines optisch lesbaren Barcode-Aufklebers auf dem jeweiligen Schaltschrank aufgebracht.

Das Dokumentationssystem 6 umfasst außerdem einen Datenspeicher 10, in dem Dokumentationsdaten 12 zentral gespeichert sind. Diese beschreiben die Anlage 2 vollständig. Bestimmten Anlagenteilen 4a,b sind bestimmte Teile 14a-c der Dokumentationsdaten 12 zugeordnet.

Das Dokumentationssystem 6 umfasst außerdem ein mobiles Anzeigegerät 16 in Form eines Handheld-PC, welches also von einem Benutzer 18 entlang der weitläufigen Anlage 2 mitgeführt werden kann. Das Anzeigegerät 16 enthält eine Anzeigeeinrichtung 20, im Beispiel einen Bildschirm, zur Anzeige der Dokumentationsdaten 12.

Das Dokumentationssystem 6 enthält weiterhin eine Erfassungseinheit 22, welche im Ausführungsbeispiel im Anzeigegerät 16 integriert ist. Die Erfassungseinheit 22 dient der Erfassung der Kennmarken 8a,b. Im Beispiel enthält die Erfassungseinheit 22 einen optisch arbeitenden Scanner 23 in Form einer Videokamera, welche die Barcodes der Kennmarken 8a,b optisch erfasst und somit die Zuordnung der Dokumentationsdaten 12 zu den entsprechenden Anlagenteilen 4a,b ermöglicht.

Das Dokumentationssystem 6 enthält außerdem eine Steuerung 24, im Beispiel ebenfalls in das Anzeigegerät 16 integriert, welche das Anzeigegerät 16 mit Hilfe der Erfassungseinheit 22 folgendermaßen betreibt:
Bei Erfassung einer bestimmten der Kennmarken 8a,b durch die Erfassungseinheit 22 identifiziert diese das entsprechend durch diese gekennzeichnete Anlagenteil 4a,b. Die Steuerung 24 ermittelt daraufhin den für dieses Anlagenteil relevanten Anteil, also einen oder mehrere der Teile 14a-c der Dokumentationsdaten 12.

Entlang des Pfeils 26 erfolgt sodann die Übertragung des ermittelten Teils der Dokumentationsdaten 12 an das Anzeigegerät 16. Hierzu umfasst das Anzeigegerät 16 eine Empfangseinheit 28. Die Daten werden dann an der Anzeigeeinrichtung 20 dem Benutzer 18 dargestellt.

Wird das Dokumentationssystem bei Anlagen 2 in Form von Neuanlagen eingesetzt, erhält z.B. jeder Schaltschrank oder jedes Schaltpult (Anlagenteile 4a,b) einen Barcode oder ähnliches (Kennmarke 8a,b), welcher z.B. sowohl auf der Tür als auch im Inneren des entsprechenden Schrankes oder Pultes gut ersichtlich angebracht wird. Der entsprechend auf er Kennmarke 8a,b verfügbare Code ist z.B. über ein nicht dargestelltes Programm, welches in der Steuerung 24 abläuft, mit den entsprechenden Plänen für diesen Schrank oder Schaltpult, also dem entsprechenden Teil 14a-b der Dokumentationsdaten 12, vernetzt.

Wenn z.B. bei der Inbetriebnahme oder im Rahmen einer Störung oder Servicetätigkeit die entsprechenden Pläne benötigt werden, kann dies mit Hilfe des Dokumentationssystems 6 bzw. der Anzeigeeinrichtung 20 dezentral erfolgen. Die Erfassungseinheit 22 bildet mit anderen Worten ein Codelesegerät, die Steuerung 24 ist mit einer Software ausgerüstet, um die relevanten Dokumentationsdaten 12 auszuwählen bzw. zuzuordnen und an der Anzeigeeinrichtung 20 sofort einzusehen.

Zur entsprechenden Auswahl, welcher Teil der Dokumentationsdaten 12 genau wie dargestellt wird, umfasst das Anzeigegerät 16 außerdem eine Eingabeeinrichtung 30, z.B. eine Tastatur. In einer alternativen Ausführungsform ist die Anzeigeeinrichtung 20 als berührungsempfindliche Anzeige (Touchscreen) ausgebildet, so dass die Eingabeeinrichtung 30 und die Anzeigeeinrichtung 20 zusammenfallen.

In einer weiteren vorteilhaften Ausführungsform des Verfahrens ist die Eingabeeinrichtung 30 auch zur Veränderung der Dokumentationsdaten 12 im Anzeigegerät 16 ausgebildet. Diese können dann dort nicht nur angesehen, sondern auch geändert, mit Notizen oder Lesezeichen versehen, gelöscht oder aktualisiert werden. Das Anzeigegerät 16 enthält dann außerdem eine Sendeeinrichtung 32, mit welcher entlang des Pfeils 34 die veränderten Dokumentationsdaten 12 wieder zum Datenspeicher 10 übertragen und dort gespeichert werden können.

Das Dokumentationssystem 6 lässt sich auch für Modernisierungsanlagen bereitstellen. Im Vorfeld der eigentlichen Modernisierung einer veralteten Anlage 2 wird dem Kunden, also dem Anlagenbetreiber, eine Aktualisierung seiner Unterlagen (Dokumentationsdaten 12) angeboten. Hierzu wird an der Anlage 2 das Dokumentationssystem 6 installiert.

Zunächst werden dabei vorhandene, z.B. in Papierform vorliegende Anlagenpläne, eingescannt und als Dokumentationsdaten 12 im Datenspeicher 10 abgelegt. Anschließend werden, die Anlagenteile 4a,b mit Kennmarken 8a,b versehen und über eine spezielle Software mit den eingescannten Plänen, also den Dokumentationsdaten 12 vernetzt. So werden die Zuordnungen zwischen den Anlagenteilen 4a,b und den Teilen 14a-c erzeugt.

Anschließend werden durch einen Benutzer 18 mit dem oben genannten Verfahren die als Dokumentationsdaten 12 vorliegenden Pläne mit dem tatsächlichen Zustand der Anlage 2 verglichen und eventuell angepasst bzw. aktualisiert. Nach Abschluss dieser Arbeiten liegt dann im Datenspeicher 10 bereits ein aktueller Satz von Dokumentationsdaten 12 vor. Diese Arbeiten können größtenteils vom Anlagenbetreiber, und somit für diesen kostengünstig selbst durchgeführt werden.

Auf den aktuellen elektronischen Daten kann dann ein Anbieter einen Vorschlag für eine Anlagenmodernisierung ausarbeiten, was deutlich kostengünstiger als auf Basis von Papierplänen durchgeführt werden kann.

In einer weiteren Ausführungsform der Erfindung umfasst das Dokumentationssystem 6, im Beispiel wieder das Anzeigegerät 16, eine Identifikationseinheit 36, mit Hilfe derer der Benutzer 18 eindeutig identifizierbar ist. Dies geschieht z.B. durch Eingabe von dessen Benutzername und eines Passworts. Das Dokumentationssystem 6 kann so, beispielsweise durch die Steuerung 24, eine Benutzer-, Zugriffs- oder Berechtigungssteuerung für die Anzeige und/oder die Veränderung von Dokumentationsdaten 12 im Anzeigegerät 16 realisieren. Veränderte Dokumentationsdaten 12 können so mit dem verändernden Benutzer 18 und z.B. einen Zeitstempel gekennzeichnet werden.

In einer weiteren bevorzugten Ausführungsform enthält das Dokumentationssystem 6, im Beispiel der Datenspeicher 10, eine Schnittstelle 38 zu einem Hersteller 40 der Anlage 2 oder eines Teil derer bzw. zu dessen elektronischem Datenverarbeitungssystem. Entlang eines Pfeils 42 ist es so möglich, auch gegenüber den vorhandenen Dokumentationsdaten 12 veränderte, aktualisierte oder ergänzende Herstellerdaten als Dokumentationsdaten 12 in das Dokumentationssystem 6 einzubinden. Dies sind z.B. aktualisierte Schaltpläne oder Datenblätter von in der Anlage 2 zu ersetzenden Austauschkomponenten.

## Patentansprüche

1. Dokumentationssystem (6) für eine, eine Vielzahl von Anlagenteilen (4a,b) umfassende Anlage,
- mit an den Anlagenteilen (4a,b) anbringbaren, ein jeweiliges Anlagenteil (4a,b) eindeutig kennzeichnenden Kennmarken (8a,b),
- mit einem Dokumentationsdaten (12) der Anlage (2) enthaltenden Datenspeicher (10),
- mit einem mobilen Anzeigegerät (16) für die Dokumentationsdaten (12),
- mit einer, vorzugsweise am Anzeigegerät (16) angeordneten, Erfassungseinheit (22) zur Erfassung einer der Kennmarken (8a,b),
- mit einer das Anzeigegerät (16) anhand der Erfassungseinheit (22) derart betreibenden Steuerung (24), dass bei Erfassung der Kennmarke (8a,b) jeweilige, dem durch die Kennmarke (8a,b) gekennzeichneten Anlagenteil (4a,b) zugeordnete Dokumentationsdaten (12) vom Datenspeicher (10) zum Anzeigegerät (16) übertragen und dort dargestellt werden.

2. Dokumentationssystem (6) nach Anspruch 1, bei dem das Anzeigegerät (16) eine auf die Dokumentationsdaten (12) einwirkende Eingabeeinrichtung (30) enthält.

3. Dokumentationssystem (6) nach Anspruch 2, bei dem die Eingabeeinrichtung (30) eine berührungsempfindliche Anzeigeeinrichtung (20) des Anzeigegerätes (16) enthält.

4. Dokumentationssystem (6) nach Anspruch 2 oder 3, bei dem die Eingabeeinrichtung (30) für eine Veränderung der Dokumentationsdaten (12) ausgebildet ist, und das Anzeigegerät (16) eine Sendeeinrichtung (32) zur Übertragung veränderter Dokumentationsdaten (12) zum Datenspeicher (10) enthält.

5. Dokumentationssystem (6) nach einem der vorhergehenden Ansprüche, mit einer einen Benutzer (18) erkennenden Identifikationseinheit (36).

6. Dokumentationssystem (6) nach einem der vorhergehenden Ansprüche, mit einer Schnittstelle (38) zum Austausch von Dokumentationsdaten (12) mit einem Hersteller (40) zumindest eines Teils der Anlage (2).

7. Dokumentationssystem (6) nach einem der vorhergehenden Ansprüche, bei dem die Erfassungseinheit (22) einen die Kennmarke (8a,b) optisch erfassenden Scanner (23) enthält.

8. Verfahren zum Betreiben eines Dokumentationssystems (6) nach einem der vorhergehenden Ansprüche, bei dem
- an einem jeweiligen Anlagenteil (4a,b) eine der Kennmarken (8a,b) angebracht wird,
- die Dokumentationsdaten (12) im Datenspeicher (10) abgelegt werden,
- die Erfassungseinheit (22) eine der Kennmarken (8a,b) erfasst,
- die Steuerung (24) das Anzeigegerät (16) derart betreibt, dass bei Erfassung der Kennmarke (8a,b) jeweilige, dem gekennzeichneten Anlagenteil (4a,b) zugeordnete Dokumentationsdaten (12) vom Datenspeicher (10) zum Anzeigegerät (16) übertragen und dort dargestellt werden.

9. Verfahren nach Anspruch 8, bei dem durch die Eingabeeinrichtung (30) auf die Dokumentationsdaten (12) eingewirkt wird.

10. Verfahren nach Anspruch 8 oder 9, bei dem durch die Eingabeeinrichtung (30) die Dokumentationsdaten (12) verändert werden und die Sendeeinrichtung (32) die veränderten Dokumentationsdaten (12) zum Datenspeicher (10) überträgt.

11. Verfahren nach einem der Ansprüche 8 bis 10, bei dem die Identifikationseinheit (36) den Benutzer (18) erkennt.

12. Verfahren nach einem der Ansprüche 8 bis 11, bei dem über die Schnittstelle (38) Dokumentationsdaten (12) mit dem Hersteller (40) zumindest eines Teils der Anlage (2) ausgetauscht werden.

13. Verfahren nach einem der Ansprüche 8 bis 12, bei dem der Scanner (23) die Kennmarke (8a,b) optisch erfasst.
